# EUROPÄISCHE PATENTSCHRIFT

(11) **EP 0 831 391 B1**
(45) Veröffentlichungstag und Bekanntmachung des Hinweises auf die Patenterteilung: **22.01.2014**
(21) Anmeldenummer: 97113681.7
(22) Anmeldetag: 07.08.1997
(51) Int. Cl.: G06F 3/0489

(54) **System und Verfahren zur Anzeige alphanumerischer und/oder graphischer Zeichen**
System and method for displaying alphanumeric and /or graphical characters
Système et methode à afficer des charactères alphanumeriques et/ou graphiques

(30) Priorität: 23.08.1996 DE 19634164
(43) Veröffentlichungstag der Anmeldung: 25.03.1998
(73) Patentinhaber: BSH Bosch und Siemens Hausgeräte GmbH, 81739 München (DE)
(72) Erfinder: Liese, Frank, Dr. rer. nat, 10781 Berlin (DE); Kabel, Clemens, Dip.-Inform., 14129 Berlin (DE)

(56) Entgegenhaltungen:
- EP-A1- 0 701 220
- WO-A-95/04340
- US-A- 5 398 045
- ANONYMOUS: "Highlighting candidate changes in an object-based sample program" RESEARCH DISCLOSURE, MASON PUBLICATIONS, HAMPSHIRE, GB, Bd. 347, Nr. 12, März 1993 (1993-03), XP007118787 ISSN: 0374-4353
- SCHLOSS R J: "Novel business uses of independently created hyperlinks in the World Wide Web: basic mechanism and examples" PROCEEDINGS OF THE ANNUAL HAWAII INTERNATIONAL CONFERENCE ON SYSTEM SCIENCES, XX, XX, Bd. 2, 3. Januar 1996 (1996-01-03), Seiten 137-146, XP002151364
- "HYPERTEXT CONTROL FOR GRAPHIC USER INTERFACE APPLICATION ENABLER PRODUCTS" 1. Juli 1995 (1995-07-01), IBM TECHNICAL DISCLOSURE BULLETIN, IBM CORP. NEW YORK, US, PAGE(S) 27-29 , XP000521593 ISSN: 0018-8689 * das ganze Dokument *

## Beschreibung

Die Erfindung betrifft ein System zur Anzeige alphanumerischer und/oder graphischer Zeichen, mit einer optischen Anzeigeeinrichtung und einem Steuerwerk, wobei einzelne alphanumerische und/oder graphische Zeichen mit einem erstem Markierungszeichen versehen sind, wobei die mit dem ersten Markierungszeichen versehenen Zeichen in der Weise auswählbar sind, daß bei einer Auswahl zu den mit dem ersten Markierungszeichen versehenen Zeichen zugeordnete Informationen aus einem Speicher (MEM) abrufbar und auf der Anzeigeeinrichtung darstellbar sind. Die Erfindung betrifft auch ein Verfahren zur Anzeige alphanumerischer und/oder graphischer Zeichen, sowie eine Verwendung des gattungsgemäßen Systems.

Ein eingangs definiertes System geht hervor aus dem US-Patent 5,398,045. Dort ist einer als Anzeigeeinrichtung eingesetzten Kathodenstrahlröhre eine Kontrolleinheit zugeordnet, welche berührungsempfindliche Bereiche aufweist. Mit dieser ist die auf der Anzeigeeinrichtung dargestellte Anzeige beeinflußbar, und sind Menüs zur Darstellung und Anwendung abrufbar, welche in der Anzeige enthaltenen Zeichen zugeordnet sind.

Aus der WO 1995/003340 A1 geht ein Navigationssystem für ein Fahrzeug hervor. Dieses weist eine Anzeigeeinrichtung auf, auf welcher Listen von Zielorten und Straßen sowie alphanumerischer Symbole zur Auswahl und Eingabe mittels einer Tastatur dargestellt sind.

Es sind bereits Systeme zur Anzeige alphanumerischer Zeichen bekannt, die die Anzeige sogenannter Hypertexte ermöglichen. Ein Hypertext ist ein Text, in dem bestimmte Textstellen (Hyperlinks) mit zusätzlicher Text- oder Bildinformation ("Hilfetexte") hinterlegt sind. Diese Textstellen (Hyperlinks) werden im Text entsprechend gekennzeichnet. Wird ein solcher Hyperlink mit der einer "Maus" angewählt und aufgerufen, so springt das Steuerungsprogramm zur hinterlegten Bild- bzw. Textinformation.

Weiterhin sind sogenannte Berührungsbildschirme bzw. berührungssensitive Bildschirme (Touch-Screen) bekannt. Dabei erfolgt die Bedienung des zugehörigen Steuerungsprogramms durch Berühren des Bildschirmes. Auf verschiedenen Berührungsbereichen des Bildschirmes werden einzelne Bedienmöglichkeiten vorgeschlagen und durch Berühren eines dieser Bereiche löst der Anwender die Generierung von Eingabebefehlen aus, die zur Aktivierung des Steuerungsprogrammes führt.

Aufgrund von Fingergröße und Bildschirmauflösung (Wegdriften des Bildes, Parallaxe) ist allerdings die Genauigkeit, mit der an einem derartigen Berührungsbildschirm unter den verschiedenen, zur Auswahl angebotenen Möglichkeiten selektiert werden kann, eingeschränkt. Sind zwei Berührungsbereiche klein und/oder liegen sie eng auf dem Bildschirm beieinander, so besteht Gefahr, daß unerwünschte Eingabebefehle generiert werden.

Ausgehend von diesem Stand der Technik liegt der Erfindung die Aufgabe zugrunde, ein System und ein Verfahren der eingangs genannten Art anzugeben, die die Gefahr der Generierung unerwünschter Eingabefehle reduzieren.

Diese Aufgabe wird durch ein System und ein Verfahren gelöst, dies durch die Ansprüche definiert sind.

Das erfindungsgemäße System zur Anzeige alphanumerischer und/oder graphischer Zeichen, mit einer optischen Anzeigeeinrichtung und einem Steuerwerk, wobei einzelne alphanumerische und/oder graphische Zeichen mit einem erstem Markierungszeichen versehen sind, wobei die mit dem ersten Markierungszeichen versehenen Zeichen in der Weise auswählbar sind, daß bei einer Auswahl zu den mit dem ersten Markierungszeichen versehenen Zeichen zugeordnete Informationen aus einem Speicher abrufbar und auf der Anzeigeeinrichtung darstellbar sind, zeichnet sich somit dadurch aus, daß die optische Anzeigeeinrichtung ein Berührungsbildschirm ist, und daß ein dem Steuerwerk zugeordnetes Steuerungsprogramm in der Weise ausgestaltet ist. daß ausgelöst durch einen durch Berühren eines Bereiches des Berührungsbildschirms generierten ersten Eingabebefehl ein Zeichen oder eine Gruppe benachbarter Zeichen aus einer Mehrzahl gleichzeitig auf der Anzeigeeinrichtung dargestellter Zeichen, die mit dem ersten Markierungszeichen versehen sind, oder gleichzeitig auf der Anzeigeeinrichtung dargestellter Gruppen benachbarter Zeichen, die mit dem ersten Markierungszeichen versehen sind, für eine Verarbeitung auswählbar sind.

Das erfindungsgemäße Verfahren zur Anzeige alphanumerischer und/oder graphischer Zeichen auf einem Berührungsbildschirm besteht aus den Schritten: Versehen einzelner alphanumerischer und/oder graphischer Zeichen mit einem erstem Markierungszeichen versehen; und Auswählen eines Zeichens oder einer Gruppe benachbarter Zeichen aus einer Mehrzahl gleichzeitig auf dem Berührungsbildschirm dargestellter Zeichen, die mit dem ersten Markierungszeichen versehen sind, oder gleichzeitig auf dem Berührungsbildschirm dargestellter Gruppen benachbarter Zeichen, die mit dem ersten Markierungszeichen versehen sind, mittels eines durch Berühren eines Bereiches des Berührungsbildschirms generierten ersten Eingabebefehls für eine Verarbeitung in der Weise, daß durch die Auswahl Informationen, die den mit dem ersten Markierungszeichen versehenen Zeichen zugeordnet sind, aus einem Speicher abrufbar und auf dem Bildschirm darstellbar sind.

Die Erfindung ist mit einer Mehrzahl von Vorteilen verbunden. Das erfindungsgemäße System ermöglicht selbst dann fehlerfreie Eingaben, wenn die auf dem Bildschirm dargestellten Zeichen, die für eine Verarbeitung auszuwählen sind, relativ klein sind, also eine relativ geringe Darstellungsgröße aufweisen, und/oder relativ eng neben weiteren auswählbaren Zeichen angeordnet sind. Damit werden aufwendige programmtechnische Maßnahmen überflüssig, die die Darstellungsform verändern, beispielsweise eine Vergrößerung der Einzelzeichen und/oder die Generierung einer größeren Beabstandung der Einzelzeichen.

Vorteilhafte Ausführungsform des erfindungsgemäßen Ausführungssystems sind dadurch gekennzeichnet, daß für die Eingabe von Befehlen zur Auswahl der Zeichen Berührungsschalter vorgesehen sind, die in den Bildschirm integriert ist. Dies ist zum einen mit dem Vorteil verbunden, daß eine separate Eingabevorrichtung, die für den unerfahrenen Anwender nur schwer zu bedienen ist, wie beispielsweise eine "Maus", nicht vorzusehen ist. Zum anderen läßt sich der Bildschirm zugleich sowohl für die Darstellung der auszuwählenden Zeichen als auch für die Darstellung von Informationen ("Hilfetexte") verwenden, die den auszuwählenden Zeichen zugeordnet sind.

Weitere vorteilhafte Ausführungsformen sind in den Unteransprüchen gekennzeichnet.

Die Erfindung wird nun anhand der Zeichnungen beschrieben:
Figur 1 ein Blockschaltbild eines erfindungsgemäßen Systems,
Figur 2 eine Bildschirmdarstellung in einem System nach Figur 1, und
Figur 3 ein Blockschaltbild eines Steuerungssystems zur Steuerung von Hausgeräten, in welchem ein erfindungsgemäßes System gemäß Figur 1 verwendet wird.

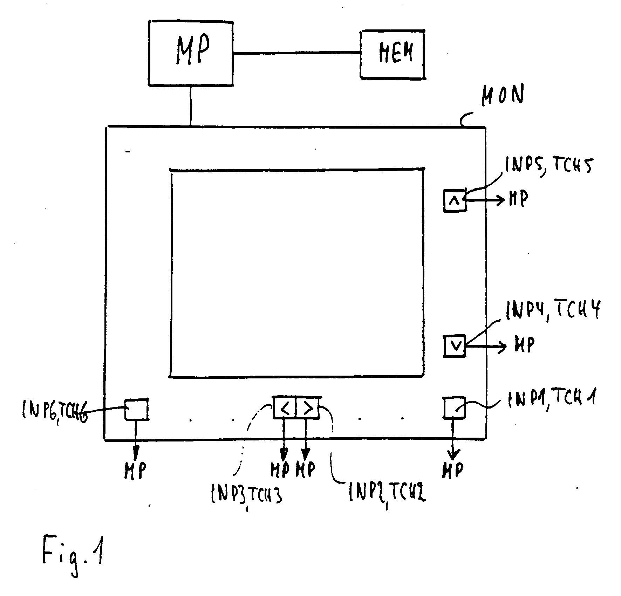

In Figur 1 ist ein erfindungsgemäßes System zur Anzeige alphanumerischer und/oder graphischer Zeichen dargestellt. Es weist eine optische Anzeigeeinrichtung MON, ein Steuerwerk MP und einen Speicher MEM auf. Als optische Anzeigeeinrichtung MON wird insbesondere ein Berührungsbildschirm bzw. ein berührungssensitiver Bildschirm (Touch-Screen) mit einer Auflösung von 800 X 600 Pixel verwendet. Als Steuerwerk MP wird beispielsweise ein Mikroprozessor verwendet. Der Speicher MEM dient einerseits zur Aufnahme eines Steuerungsprogramms, das dem Steuerwerk MP zugeordnet ist, und andererseits von Informationen, die auf der optischen Anzeigeeinrichtung ("Bildschirm") darstellbar sind. Zu diesen Informationen gehören einzelne alphanumerische und/oder graphische Zeichen ("Nutzzeichen"), Markierungszeichen, die noch beschrieben werden, sowie den Nutzzeichen zugeordnete Informationen wie Text und/oder Bildinformationen und "Hilfetexte", die die zugehörigen Nutzzeichen erläutern.

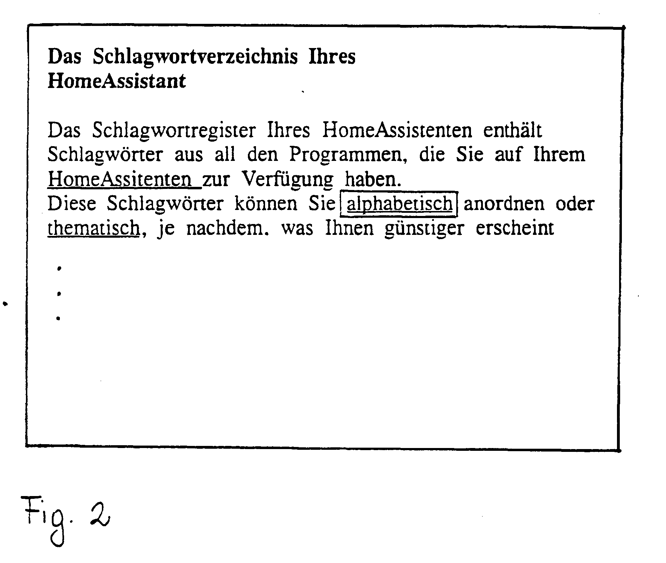

Auf dem Bildschirm sind, wie in Figur 2 dargestellt, einzelne Nutzzeichen bzw. Gruppen mit einem erstem Markierungszeichen versehen. Das erste Markierungszeichen besteht z.B. aus einer Unterstreichung der Nutzzeichen. aus einer vorgebbaren Farbe und/oder Form der Nutzzeichen oder aus sonstigen optischen Merkmalen. Das erste Markierungszeichen läßt sich durch den Anwender in einen Text setzen oder kann bereits in vorgefertigten Texten vorliegen. Bei der Bildschirmdarstellung nach Figur 2 sind die Begriffe "Home Assistenten", "alphabetisch" und "thematisch" mit einem ersten Markierungszeichen in Form einer Unterstreichung markiert.

Die mit dem ersten Markierungszeichen versehenen Nutzzeichen können durch einen ersten Eingabebefehl in der Weise ausgewählt werden, daß bei einer Auswahl zu den mit dem ersten Markierungszeichen versehenen Nutzzeichen zugeordnete Informationen (Text- und/oder Bildinformationen; "Hilfetexte") aus dem Speicher MEM abrufbar und auf dem Bildschirm MON darstellbar sind. In dem erfindungsgemäßen System lassen sich vorzugsweise aber nur solche Nutzzeichen für eine Verarbeitung (z.B. Aufrufen von Hilfetexten) auswählen. die mit einem ersten und einem zweiten Markierungszeichen versehen sind.

Das zweite Markierungszeichen läßt sich - ebenso wie das erste Markierungszeichen - durch den Anwender in einen Text setzen oder kann bereits in vorgefertigten Texten vorliegen. Das zweite Markierungszeichen besteht z.B. aus einer Unterstreichung der Nutzzeichen, aus einer vorgebbaren Farbe und/oder Form der Nutzzeichen oder aus sonstigen optischen Merkmalen. wobei sich das erste und das zweite Markierungszeichen unterscheiden. Beispielsweise besteht das erste Markierungszeichen aus einer Unterstreichung der Nutzzeichen, aus einer vorgebbaren Farbe und/oder Form der Nutzzeichen und das zweite Markierungszeichen besteht aus einem Block, der die mit dem ersten Markierungszeichen versehenen Zeichen umgibt. Wie bereits erwährt, lassen sich nur solche Nutzzeichen mit einem zweiten Markierungszeichen versehen, die bereits durch ein erstes Markierungszeichen markiert sind.

Bei der Bildschirmdarstellung nach Figur 2 ist von den Begriffen "Home Assistenten", "alphabetisch" und "thematisch", die mit einem ersten Markierungszeichen in Form einer Unterstreichung markiert sind. der Begriff "alphabetisch" mit einem zweiten Markierungszeichen in Form eines Umrandungsblocks markiert.

Die Auswahl der mit einem ersten und zweiten Markierungszeichen versehenen Nutzzeichen kann in unterschiedlicher Weise (Ansprüche 3 bzw. 5) erfolgen:
Ein Zeichen oder eine Gruppe benachbarter Zeichen ("Stichwort") aus einer Mehrzahl gleichzeitig auf der Anzeigeeinrichtung (MON) dargestellter Zeichen, die mit dem (ersten und) zweiten Markierungszeichen versehen sind. oder gleichzeitig auf der Anzeigeeinrichtung (MON) dargestellter Gruppen benachbarter Zeichen, die mit dem (ersten und) zweiten Markierungszeichen versehen sind, sind durch einen zweiten Eingabebefehl (Anspruch 3) oder einen dritten Eingabebefehl (Anspruch 5) auswählbar.

Damit sind die folgenden zwei Alternativen vorgesehen:
Gemäß der ersten Alternative (Anspruch 3) erfolgt die Auswahl der mit dem ersten und dem zweiten Markierungszeichen versehenen Nutzzeichen durch Eingabe des zweiten Eingabebefehls in eine erste Eingabevorrichtung INP1, wobei die erste Eingabevorrichtung INP1 insbesondere ein erster Berührungsschalter TCH1 ist, der in den Bildschirm MON integriert ist. An der ersten Eingabevorrichtung INP1 ist beispielsweise der Text "Stichwort erklären" angebracht. Nach Betätigen von INP1 bzw. Berühren von TCH1 wird zu der Hilfeseite oder zu dem Audio/Video-Dokument gesprungen, das zugeordnet zu dem Stichwort in dem Speicher MEM hinterlegt ist.

Gemäß der zweiten Alternative (Anspruch 5) wird der dritte Eingabebefehl durch Berühren des Berührungsbildschirms an der Stelle des mit dem zweiten Markierungszeichen versehenen Zeichens oder der mit dem zweiten Markierungszeichen versehenen Zeichen gebildet.

Im Rahmen der zweiten Alternative kann vorgesehen sein, daß das dem Steuerwerk MP zugeordnete Steuerungsprogramm in der Weise ausgestaltet ist, daß der geometrische Abstand eines Zeichens, das mit dem (ersten und) zweiten Markierungszeichen versehen ist, oder einer Gruppe benachbarter Zeichen, die mit dem (ersten und) zweiten Markierungszeichen versehen sind, zu einem weiteren Zeichen, das mit dem (ersten und) zweiten Markierungszeichen versehen ist, oder einer weiteren Gruppe auf dem Bildschirm MON dargestellter Zeichen, die mit dem (ersten und) zweiten Markierungszeichen versehen sind, ermittelt wird. In diesem Zusammenhang ist vorgesehen, daß der dritte Eingabebefehl nur generierbar ist, wenn der geometrische Abstand größer als ein vorgebbarer Abstand ist. Auf diese Weise wird eine fehlerfreie Auswahl von Zeichen, die auf dem Bildschirm dargestellt sind und die mit dem zweiten Markierungszeichen versehen sind, mittels Berührung ermöglicht, wobei der Zeichenabstand, Fingerkuppengröße und anzeigeimmanente Fehler berücksichtigt werden.

In diesem Zusammenhang (zweite Alternative) kann weiterhin vorgesehen sein, dass das dem Steuerwerk MP zugeordnete Steuerungsprogramm in der Weise ausgestaltet ist, daß der Berührungsschalter TCH1 mit einem dritten Markierungszeichen versehen wird, wenn der geometrische Abstand kleiner als der vorgebbare Abstand ist. Dieses dritte Markierungszeichen besteht beispielsweise aus einer gelben Umrandung des Berührungsschalters. Der Berührungsschalter TCH1 ist nur in diesem Fall für die Eingabe des zweiten Eingabebefehls freigegeben.

Die Auswahl eines Zeichens bzw. einer Gruppen von Zeichen, die mit dem ersten und zweiten Markierungszeichen versehen sind, um einen zugehörigen Hilfetext aufzurufen kann in folgender Weise eingeleitet werden (Anspruch 8):
Gemäß einer ersten Alternative ist das dem Steuerwerk MP zugeordnete SteuerungsProgramm der Weise ausgestaltet ist, daß ausgelöst durch einen vierten Eingabebefehl ein Sprung von einem ersten Zeichen, das mit dem (ersten und) zweiten Markierungszeichen versehen sind, oder von einer ersten Gruppe benachbarter Zeichen, die mit dem (ersten und) zweiten Markierungszeichen versehen sind, in Vorwärtsrichtung gemäß Textfluß zu einem zweiten Zeichen, das mit dem (ersten und) zweiten Markierungszeichen versehen ist. oder zu einer zweiten Gruppe benachbarter. Zeichen, die mit dem (ersten und) zweiten Markierungszeichen versehen sind, erfolgt. Ausgelöst durch einen fünften Eingabebefehl kann ein Sprung von dem ersten Zeichen, das mit dem (ersten und) zweiten Markierungszeichen versehen ist, oder von der ersten Gruppe benachbarter Zeichen, die mit dem (ersten und) zweiten Markierungszeichen versehen sind, in Rückwärtsrichtung, also entgegen dem Textfluß, zu einem dritten Zeichen, das mit dem (ersten und) zweiten Markierungszeichen versehen ist, oder zu einer zweiten Gruppe benachbarter Zeichen, die mit dem (ersten und) zweiten Markierungszeichen versehen sind, erfolgen.

Für die Eingabe des vierten und/oder der fünften Eingabebefehls ist mindestens eine weitere Eingabevorrichtung vorgesehen, insbesondere sind dies die in Figur 1 schematisch dargestellten Eingabevorrichtungen INP2 und INP3, wobei die Eingabevorrichtung INP2 für die Eingabe des vierten Eingabebefehls vorgesehen ist und wobei die Eingabevorrichtung INP3 für die Eingabe des fünften Eingabebefehls vorgesehen ist. Die Eingabevorrichtungen INP2, INP3 sind insbesondere Berührungsschalter TCH2, TCH3, die in die Anzeigeeinrichtung MON integriert sind. An der Eingabevorrichtung INP2 ist beispielsweise der Text "Nächstes Stichwort" angebracht und an der Eingabevorrichtung INP3 ist beispielsweise der Text "Nächstes Stichwort" "Vorhergehendes Stichwort" angebracht.

Wird der Berührungsschalter TH2 bzw. TH3 länger als z.8. 2 Sekunden ununterbrochen berührt, so beginnt ein kontinuierliches Durchwandern der "Stichworte", das heißt der mit dem ersten und zweiten Markierungszeichen versehenen Nutzzeichen auf dem Bildschirm, wobei z.B. 4 Stichworte pro sec nacheinander in Rückwärtsrichtung bzw. in Vorwärtsrichtung ausgewählt werden.

Die vorstehend beschriebene Einleitung eines Aufrufs von Hilfetexten zu einem Zeichen bzw. einer Gruppen von Zeichen, die mit dem ersten und zweiten Markierungszeichen versehen sind ist, erfolgt also mittels der Eingabeeinrichtungen INP2, INP3 bzw. TCH2, TCH3.

Der Aufruf von Hilfetexten zu einem Zeichen bzw. einer Gruppen von Zeichen, die mit dem (ersten und) zweiten Markierungszeichen versehen sind, kann auch wie im folgenden beschrieben durchgeführt werden (Anspruch 11):
Das dem Steuerwerk MP zugeordnete Steuerungsprogramm ist in der Weise ausgestaltet, daß mindestens eine Information, die einem mit dem (ersten und) zweiten Markierungszeichen versehenen Zeichen zugeordnet ist, auf dem Bildschirm MON dargestellt wird. Die Darstellung dieser Hilfetexte kann gemeinsam mit dem zugehörigen Nutzzeichen, das mit dem ersten und zweiten Markierungszeichen versehen ist, insbesondere mit dem Textteil, in dem dieses Nutzzeichen angeordnet ist, erfolgen. In diesem Zusammenhang kann vorgesehen sein, daß in dem Hilfetext für ein doppelt markiertes Nutzzeichen dieses ebenfalls und insbesondere zu Beginn des Hilfetextes angeordnet ist.

Geht man nun von einer solchen Darstellung dieser Information ("Hilfetext") auf dem Bildschirm MON aus, sind ein Zeichen oder eine Gruppe benachbarter Zeichen aus einer Mehrzahl gleichzeitig auf dem Bildschirm MON darstellbarer Zeichen, die mit dem ersten und) zweiten Markierungszeichen versehen sind, oder gleichzeitig auf der Bildschirm MON darstellbarer Gruppen benachbarter Zeichen, die mit dem (ersten und) zweiten Markierungszeichen versehen sind, durch einen in mindestens eine dritte Eingabevorrichtung INP4, INP5 eingegebenen sechsten und/oder siebenten Eingabebefehl auswählbar. Bei einer Eingabe des sechsten Befehls und/oder des siebenten Befehls wird der Hilfetext auf dem Bildschirm "gescrollt", bis mindestens eine weitere Information, die einem weiteren mit dem (ersten und) zweiten Markierungszeichen versehenen Zeichen zugeordnet ist, auf dem Bildschirm MON dargestellt ist. Die (Scroll-) Bewegung der Bildschirmanzeige in dem Hilfetext bzw. in den Hilfetextes kann dabei bis zu einem in den Texten angeordneten (doppelt markierten) Nutzzeichen erfolgen.

Die Eingabevorrichtungen INP4, INP5 sind insbesondere Berührungsschalter TCH4, TCH5, die in die Anzeigeeinrichtung MON integriert sind. An der Eingabevorrichtung INP4 ist beispielsweise der Text "Vorwärts" angebracht und an der Eingabevorrichtung INP5 ist beispielsweise der Text "Rückwärts" angebracht.

Der vorstehende Aufruf bzw. die Aktivierung von Hilfetexten zu einem Zeichen bzw. einer Gruppen von Zeichen, die mit dem (ersten und) zweiten Markierungszeichen versehen sind, erfolgt also, während der Hilfetext bzw. die Hilfetexte angezeigt werden, wobei die Eingabeeinrichtungen INP4, INP5 bzw. TCH4, TCH5 verwendet werden.

Die Darstellungsprozeduren im Rahmen der zweiten Alternative können weiterhin auch wie folgt ausgestaltet sein:
Bei Hilfetextseiten, die größer als eine Bildschirmseite sind, kann der sichtbare Bereich der Hilfeseiten durch "Scrollen" so verschoben werden, daß das ausgewählte Stichwort im Hilfetext nicht mehr zu sehen ist.

Bei einem Scrollen abwärts (Betätigen von INP4: "VORWÄRTS") ist das oberste, noch auf dem Bildschirm zu sehende Stichwort ausgewählt; beim Scrollen aufwärts (Betätigen von INP5: "Rückwärts") ist das unterste, noch auf dem Bildschirm zu sehende Stichwort ausgewählt.

Wird in einem Bereich der Hilfetextseite gescrollt, in dem sich kein Stichwort befindet, so bleibt das zuletzt ausgewählte Stichwort weiterhin ausgewählt, wobei die Eingabevorrichtung INP1 bzw. TCH1 "STICHWORT ERKLÄREN" deaktiviert ist.

Darüberhinaus können folgende Darstellungsprozeduren vorgesehen sein:
Der Hilfetext bleibt bei Betätigung der Eingabevorrichtung INP3 bzw. TCH3 "NÄCHSTES STICHWORT" so lange in seiner Bildschirmlage unverändert (kein Scrollen nach unten, kein "Seitenwechsel"), wie das jeweils ausgewählte Stichwort noch auf dem Bildschirm zu sehen ist.

Ist man dagegen bei dem letzten Stichwort im gezeigten Hilfetextseitenausschnitt angelangt, so wird bei der Auswahl des folgenden Stichwortes ein neuer Ausschnitt aus der Hilfetextseite auf dem Bildschirm angezeigt.

Dieser Ausschnitt wird so gewählt, daß die Hilfeseite mit demjenigen Absatz beginnt, in dem sich das ausgewählte Stichwort befindet. Ist dieser Absatz allerdings so lang, daß das ausgewählte Stichwort in diesem Falle nicht mehr im Bildschirmausschnitt liegen würde, so wird der Ausschnitt so gewählt, daß sich das ausgewählte Stichwort in der zweiten Zeile von oben im Hilfetextausschnitt befindet.

Abweichend von der vorstehend beschriebene Textwechsel mit der anschließenden Darstellung des ausgewählten Stichwortes in der zweiten Textzeile ist jedoch folgendes vorgesehen: wenn die verbleibende Hilfeseite nicht mehr ausreicht, den gesamten Bereich der Hilfeinformation zu füllen (d.h., das ausgewählte Stichwort steht ungefähr am Ende der Hilfeseite), dann wird die verbleibende Hilfeseite so dargestellt, daß der gesamte Bereich der Hilfeinformation gefüllt ist (d.h. letzte Hilfeseitenzeile in der untersten Zeile des Bereiches der Hilfeinformation, entspricht der Darstellung bei Anschlag des Scroll-Balkens).

Wird das letzte Stichwort der Hilfeseite ausgewählt, so wird die Eingabevorrichtung INP3 bzw. TCH3 "NÄCHSTES STICHWORT" deaktiviert (z.B. Übergang zu der Farbe hellgrau auf dem Bildschirm), so daß eine weitere Betätigung von INP3 bzw. TCH3 nicht mehr möglich ist.

Weiterhin kann das System eine Eingabeeinrichtung INP6, der insbesondere ein Berührungsschalter TCH6 ist, aufweisen, wobei an INP6 bzw. TCH6 der Text "Hilfe verlassen" angebracht ist. Die Betätigung von INP6 bzw. TCH6 löst einen Übergang von einem Hilfetext zu dem Text mit den alphanumerischen und/oder graphischen Zeichen aus, für die die Hilfetexte aufgerufen werden können.

Das erfindungsgemäße System bzw. das entsprechende Verfahren läßt sich bespielsweise auch anwenden, um Details einer Grafik mit Markierungszeichen bzw. Hyperlinks zu hinterlegen.

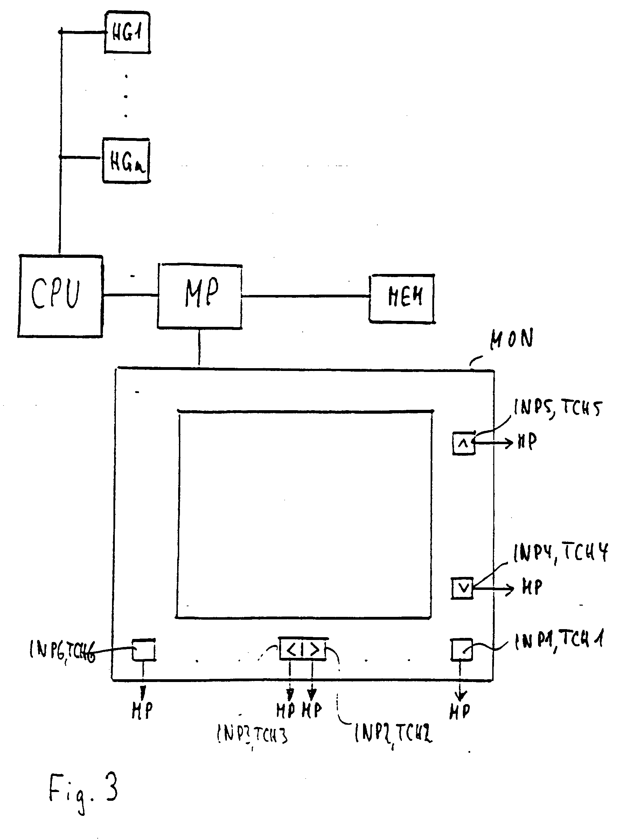

In Figur 3 ist die Verwendung eines erfindungsgemäßen Systems in einem Steuerungssystem dargestellt. das ein zentrales Steuerwerk CPU aufweist. Dieses Steuerungssystem dient der Steuerung von Hausgeräten HGl, ..., HGn, die über mindestens einen Bus mit dem zentralen Steuerwerk CPU verbunden sind. Ein derartiges Steuerungssystem ist beispielsweise in der DE 44 46 962 A1 beschrieben.

## Patentansprüche

1. System zur Anzeige alphanumerischer und/oder graphischer Zeichen, mit einer optischen Anzeigeeinrichtung (MON) und einem Steuerwerk (MP), wobei einzelne alphanumerische und/oder graphische Zeichen mit einem erstem Markierungszeichen versehen sind, wobei die mit dem ersten Markierungszeichen versehenen Zeichen in der Weise auswählbar sind, daß bei einer Auswahl zu den mit dem ersten Markierungszeichen versehenen Zeichen zugeordnete Informationen aus einem Speicher (MEM) abrufbar und auf der Anzeigeeinrichtung (MON) darstellbar sind, **dadurch gekennzeichnet, daß** die optische Anzeigeeinrichtung (MON) ein Berührungsbildschirm ist, und daß ein dem Steuerwerk (MP) zugeordnetes Steuerungsprogramm in der Weise ausgestaltet ist. daß ausgelöst durch einen durch Berühren eines Bereiches des Berührungsbildschirms generierten ersten Eingabebefehl ein Zeichen oder eine Gruppe benachbarter Zeichen aus einer Mehrzahl gleichzeitig auf der Anzeigeeinrichtung (MON) dargestellter Zeichen, die mit dem ersten Markierungszeichen versehen sind, oder gleichzeitig auf der Anzeigeeinrichtung (MON) dargestellter Gruppen benachbarter Zeichen, die mit dem ersten Markierungszeichen versehen sind, für eine Verarbeitung auswählbar sind.

2. System nach Anspruch 1. **dadurch gekennzeichnet, daß** das dem Steuerwerk (MP) zugeordnete Steuerungsprogramm in der Weise ausgestaltet ist, daß das durch den ersten Eingabebefehl ausgewählte Zeichen oder die Gruppe benachbarter, durch den ersten Eingabebefehl ausgewählter Zeichen, mit einem zweiten Markierungszeichen versehen sind.

3. System nach Anspruch 2. **dadurch gekennzeichnet, daß** ein Zeichen oder eine Gruppe benachbarter Zeichen aus einer Mehrzahl gleichzeitig auf der Anzeigeeinrichtung (MON) dargestellter Zeichen, die mit dem zweiten Markierungszeichen versehen sind, oder gleichzeitig auf der Anzeigeeinrichtung (MON) dargestellter Gruppen benachbarter Zeichen, die mit dem zweiten Markierungszeichen versehen sind, durch einen in eine erste Eingabevorrichtung (INP1) eingegebenen zweiten Eingabebefehl auswählbar sind.

4. System nach Anspruch 3, **dadurch gekennzeichnet, daß** die erste Eingabevorrichtung (INP1) ein erster Berührungsschalter (TCH1) ist, der in die Anzeigeeinrichtung (MON) integriert ist.

5. System nach einem der Ansprüche 2 bis 4, **dadurch gekennzeichnet, dass** ein Zeichen oder eine Gruppe benachbarter Zeichen aus einer Mehrzahl gleichzeitig auf der Anzeigeeinrichtung (MON) dargestellter Zeichen, die mit dem zweiten Markierungszeichen versehen sind, oder gleichzeitig auf der Anzeigeeinrichtung (MON) dargestellter Gruppen benachbarter Zeichen, die mit dem zweiten Markierungszeichen versehen sind, durch einen dritten Eingabebefehl auswählbar sind, der durch Berühren des Berührungsbildschirms an der Stelle des mit dem zweiten Markierungszeichen versehenen Zeichens oder der mit dem zweiten Markierungszeichen versehenen Zeichen gebildet wird.

6. System nach Anspruch 5. **dadurch gekennzeichnet, daß** das dem Steuerwerk (MP) zugeordnete Steuerungsprogramm in der Weise ausgestaltet ist, daß der geometrische Abstand eines Zeichens, das mit dem zweiten Markierungszeichen versehen ist. oder einer Gruppe benachbarter Zeichen, die mit dem zweiten Markierungszeichen versehen sind. zu einem weiteren Zeichen, das mit dem zweiten Markierungszeichen versehen ist. oder einer weiteren Gruppe auf der Anzeigeeinrichtung (MON) dargestellter Zeichen, die mit dem zweiten Markierungszeichen versehen sind, ermittelt wird und daß der dritte Eingabebefehl nur generierbar ist, wenn der geometrische Abstand größer als ein vorgebbarer Abstand ist.

7. System nach Anspruch 6. **dadurch gekennzeichnet, daß** das dem Steuerwerk (MP) zugeordnete Steuerungsprogramm in der Weise ausgestaltet ist, daß der erste Berührungsschalter (TCH1) mit einem dritten Markierungszeichen versehen wird, wenn der geometrische Abstand kleiner als der vorgebbare Abstand ist und daß der erste Berührungsschalter (TCH1) für die Eingabe des dritten Eingabebefehls freigegeben wird.

8. System nach einem der Ansprüche 1 bis 7, **dadurch gekennzeichnet, dass** das dem Steuerwerk (MP) zugeordnete Steuerungsprogramm in der Weise ausgestaltet ist, daß ausgelöst durch einen durch Berühren eines Bereiches des Berührungsbildschirms generierten vierten Eingabebefehl ein Sprung von einem ersten Zeichen, das mit dem zweiten Markierungszeichen versehen sind, oder von einer ersten Gruppe benachbarter Zeichen, die mit dem zweiten Markierungszeichen versehen sind, in Vorwärtsrichtung zu einem zweiten Zeichen, das mit dem zweiten Markierungszeichen versehen sind, oder zu einer zweiten Gruppe benachbarter Zeichen, die mit dem zweiten Markierungszeichen versehen sind, erfolgt, und/oder daß ausgelöst durch einen durch Berühren eines Bereiches des Berührungsbildschirms generierten fünften Eingabebefehl ein Sprung von dem ersten Zeichen, das mit dem zweiten Markierungszeichen versehen ist, oder von der ersten Gruppe benachbarter Zeichen, die mit dem zweiten Markierungszeichen versehen sind, in Rückwärtsrichtung zu einem dritten Zeichen, das mit dem zweiten Markierungszeichen versehen ist, oder zu einer zweiten Gruppe benachbarter Zeichen, die mit dem zweiten Markierungszeichen versehen sind, erfolgt.

9. System nach Anspruch 8, **gekennzeichnet durch** mindestens eine weitere Eingabevorrichtung (INP2, INP3), in die der vierte und/oder der fünfte Eingabebefehl eingebbar ist.

10. System nach Anspruch 9, **dadurch gekennzeichnet, daß** die weitere Eingabevorrichtung (INP2, INP3) ein zweiter Berührungsschalter (TCH2, TCH3) ist, der in die Anzeigeeinrichtung (MON) integriert ist.

11. System nach einem der Ansprüche 2 bis 10, **dadurch gekennzeichnet, dass** das dem Steuerwerk (MP) zugeordnete Steuerungsprogramm in der Weise ausgestaltet ist, daß mindestens eine Information, die einem mit dem zweiten Markierungszeichen versehenen Zeichen zugeordnet ist, auf der Anzeigeeinrichtung (MON) dargestellt wird, und daß bei einer Darstellung dieser Information auf der Anzeigeeinrichtung (MON) ein Zeichen oder eine Gruppe benachbarter Zeichen aus einer Mehrzahl gleichzeitig auf der Anzeigeeinrichtung (MON) darstellbarer Zeichen, die mit dem zweiten Markierungszeichen versehen sind, oder gleichzeitig auf der Anzeigeeinrichtung (MON) darstellbarer Gruppen benachbarter Zeichen, die mit dem zweiten Markierungszeichen versehen sind, durch einen in mindestens eine dritte Eingabevorrichtung (INP4, INP5) eingegebenen sechsten und/oder siebenten Eingabebefehl auswählbar sind, und daß bei einer Eingabe des sechsten Eingabebefehls und/oder des siebenten Eingabebefehls mindestens eine weitere Information, die einem weiteren mit dem zweiten Markierungszeichen versehenen Zeichen zugeordnet ist, auf der Anzeigeeinrichtung (MON) dargestellt wird.

12. Verfahren zur Anzeige alphanumerischer und/oder graphischer Zeichen auf einem Berührungsbildschirm (MON) bestehend aus den Schritten: Versehen einzelner alphanumerischer und/oder graphischer Zeichen mit einem erstem Markierungszeichen versehen; und Auswählen eines Zeichens oder einer Gruppe benachbarter Zeichen aus einer Mehrzahl gleichzeitig auf dem Berührungsbildschirm (MON) dargestellter Zeichen, die mit dem ersten Markierungszeichen versehen sind, oder gleichzeitig auf dem Berührungsbildschirm (MON) dargestellter Gruppen benachbarter Zeichen, die mit dem ersten Markierungszeichen versehen sind, mittels eines durch Berühren eines Bereiches des Berührungsbildschirms generierten ersten Eingabebefehls für eine Verarbeitung in der Weise, daß durch die Auswahl Informationen, die den mit dem ersten Markierungszeichen versehenen Zeichen zugeordnet sind, aus einem Speicher (MEM) abrufbar und auf dem Bildschirm (MON) darstellbar sind.

13. Verfahren nach Anspruch 12, **dadurch gekennzeichnet, daß** das ausgewählte Zeichen oder die Gruppe benachbarter, ausgewählter Zeichen, mit einem zweiten Markierungszeichen versehen werden.

14. Verfahren nach Anspruch 13, **dadurch gekennzeichnet, daß** ein Zeichen oder eine Gruppe benachbarter Zeichen aus einer Mehrzahl gleichzeitig auf der Anzeigeeinrichtung (MON) dargestellter Zeichen, die mit dem zweiten Markierungszeichen versehen sind, oder gleichzeitig auf der Anzeigeeinrichtung (MON) dargestellter Gruppen benachbarter Zeichen, die mit dem zweiten Markierungszeichen versehen sind, durch einen durch Berühren eines Bereiches des Berührungsbildschirms generierten zweiten Eingabebefehl auswählbar sind.

15. Verfahren nach einem der Ansprüche 13 oder 14, **dadurch gekennzeichnet, daß** ein Zeichen oder eine Gruppe benachbarter Zeichen aus einer Mehrzahl gleichzeitig auf der Anzeigeeinrichtung (MON) dargestellter Zeichen, die mit dem zweiten Markierungszeichen versehen sind, oder gleichzeitig auf der Anzeigeeinrichtung (MON) dargestellter Gruppen benachbarter Zeichen, die mit dem zweiten Markierungszeichen versehen sind, durch einen dritten Eingabebefehl auswählbar sind, der durch Berühren des Berührungsbildschirms an der Stelle des mit dem zweiten Markierungszeichen versehenen Zeichens oder der mit dem zweiten Markierungszeichen versehenen Zeichen gebildet wird.

16. Verfahren nach Anspruch 15, **dadurch gekennzeichnet, daß** der geometrische Abstand eines Zeichens, das mit dem zweiten Markierungszeichen versehen ist, oder einer Gruppe benachbarter Zeichen, die mit dem zweiten Markierungszeichen versehen sind, zu einem weiteren Zeichen, das mit dem zweiten Markierungszeichen versehen ist, oder einer weiteren Gruppe auf der Anzeigeeinrichtung (MON) dargestellter Zeichen, die mit dem zweiten Markierungszeichen versehen sind, ermittelt wird und daß der dritte Eingabebefehl nur generierbar ist, wenn der geometrische Abstand größer als ein vorgebbarer Abstand ist.

17. Verfahren nach einem der Ansprüche 13 bis 16, **dadurch gekennzeichnet, daß** ausgelöst durch einen durch Berühren eines Bereiches des Berührungsbildschirms generierten vierten Eingabebefehl ein Sprung von einem ersten Zeichen, das mit dem zweiten Markierungszeichen versehen sind, oder von einer ersten Gruppe benachbarter Zeichen, die mit dem zweiten Markierungszeichen versehen sind, in Vorwärtsrichtung zu einem zweiten Zeichen, das mit dem zweiten Markierungszeichen versehen sind, oder zu einer zweiten Gruppe benachbarter Zeichen, die mit dem zweiten Markierungszeichen versehen sind, erfolgt, und/oder daß ausgelöst durch einen durch Berühren eines Bereiches des Berührungsbildschirms generierten fünften Eingabebefehl ein Sprung von dem ersten Zeichen, das mit dem zweiten Markierungszeichen versehen ist, oder von der ersten Gruppe benachbarter Zeichen, die mit dem zweiten Markierungszeichen versehen sind, in Rückwärtsrichtung zu einem dritten Zeichen, das mit dem zweiten Markierungszeichen versehen ist, oder zu einer zweiten Gruppe benachbarter Zeichen, die mit dem zweiten Markierungszeichen versehen sind, erfolgt.

18. Verfahren nach einem der Ansprüche 13 bis 10, **dadurch gekennzeichnet, daß** mindestens eine Information, die einem mit dem zweiten Markierungszeichen versehenen Zeichen zugeordnet ist, auf der Anzeigeeinrichtung (MON) dargestellt wird, und daß bei einer Darstellung dieser Information auf der Anzeigeeinrichtung (MON) ein Zeichen oder eine Gruppe benachbarter Zeichen aus einer Mehrzahl gleichzeitig auf der Anzeigeeinrichtung (MON) darstellbarer Zeichen, die mit dem zweiten Markierungszeichen versehen sind, oder gleichzeitig auf der Anzeigeeinrichtung (MON) darstellbarer Gruppen benachbarter Zeichen, die mit dem zweiten Markierungszeichen versehen sind, durch einen durch Berühren eines Bereiches des Berührungsbildschirms generierten sechsten und/oder siebenten Eingabebefehl auswählbar sind, und daß bei einer Eingabe des sechsten Eingabebefehls und/oder des siebenten Eingabebefehls mindestens eine weitere Information, die einem weiteren mit dem zweiten Markierungszeichen versehenen Zeichen zugeordnet ist, auf der Anzeigeeinrichtung (MON) dargestellt wird.

19. Verwendung eines Systems nach einem der Ansprüche 1 bis 11 in einem Steuerungssystem mit einem zentralen Steuerwerk (CPU), das über mindestens einen Bus mit Hausgeräten (HGl, ..., HGn) verbindbar ist.

## Claims

1. System for indicating alphanumeric and/or graphical symbols, with an optical display device (MON) and a control mechanism (MP), wherein individual alphanumeric and/or graphical symbols are provided with a first marking sign, wherein the symbols provided with the first marking sign are selectable in such a manner that when a selection is made data associated with the symbols provided with the first marking sign can be called up from a memory (MEM) and displayed on the display device (MON), **characterised in that** the optical display device (MON) is a touch-sensitive image screen and that a control program associated with the control mechanism (MP) is so designed that, triggered by a first input command generated by contact with a region of the touch-sensitive image screen, a symbol or a group of adjacent symbols from a plurality of symbols simultaneously displayed on the display device (MON), which is or are provided with a first marking sign, or groups, which are simultaneously displayed on the display device (MON), of adjacent symbols provided with the first marking sign is or are selectable for processing.

2. System according to claim 1, **characterised in that** the control program associated with the control mechanism (MP) is so designed that the symbol selected by the first input command or the group of adjacent symbols selected by the first input command is or are provided with a second marking sign.

3. System according to claim 2, **characterised in that** a symbol or a group of adjacent symbols from a plurality of symbols simultaneously displayed on the display device (MON), which is or are provided with the second marking sign, or groups, which are simultaneously displayed on the display device (MON), of adjacent symbols provided with the second marking sign is or are selectable by a second input command input into a first input device (INP1).

4. System according to claim 3, **characterised in that** the first input device (INP1) is a first touch-sensitive switch (TCH1), which is integrated in the display device (MON).

5. System according to any one of claims 2 to 4, **characterised in that** a symbol or a group of adjacent symbols from a plurality of symbols simultaneously displayed on the display device (MON), which is or are provided with the second marking sign, or groups, which are simultaneously displayed on the display device (MON), of adjacent symbols provided with the second marking sign is or are selectable by a third input command, which is formed by contact with touch-sensitive image screen at the position of the symbol provided with the second marking sign or of the symbols provided with the second marking sign.

6. System according to claim 5, **characterised in that** the control program associated with the control mechanism (MP) is so designed that the geometric spacing of a symbol, which is provided with the second marking sign, or a group of adjacent symbols, which are provided with the second marking sign, from a further symbol, which is provided with the second marking sign, or a further group of symbols, which are displayed on the display device (MON) and which are provided with the second marking sign, is determined and that the third input command can be generated only when the geometric spacing is greater than a predeterminable spacing.

7. System according to claim 6, **characterised in that** the control program associated with the control mechanism (MP) is so designed that the first contact switch (TCH1) is provided with a third marking sign when the geometric spacing is smaller than the predeterminable spacing and that the first touch-sensitive switch (TCH1) is released for input of the third input command.

8. System according to any one of claims 1 to 7, **characterised in that** the control program associated with the control mechanism (MP) is so designed that triggered by a fourth input command generated by contact with a region of the touch-sensitive image screen a jump from a first symbol, which is provided with the second marking sign, or from a first group of adjacent symbols, which are provided with the second marking sign, in forward direction to a second symbol, which is provided with the second marking sign, or to a second group of adjacent symbols, which are provided with the second marking sign, takes place and/or that triggered by a fifth input command generated by contact with a region of the touch-sensitive image screen a jump from the first symbol, which is provided with the second marking sign, or from the first group of adjacent symbols, which are provided with the second marking sign, in rearward direction to a third symbol, which is provided with the second marking sign, or to a second group of adjacent symbols, which are provided with the second marking sign, takes place.

9. System according to claim 8, **characterised by** at least one further input device (INP2, INP3) into which the fourth and/or fifth input command can be input.

10. System according to claim 9, **characterised in that** the further input device (INP2, INP3) is a second touch-sensitive switch (TCH2, TCH3), which is integrated in the display device (MON).

11. System according to any one of claims 2 to 10, **characterised in that** the control program associated with the control mechanism (MP) is so designed that at least one item of information, which is associated with a symbol provided with the second marking sign, is displayed on the display device (MON) and that when this item of information is displayed on the display device (MON) a symbol or a group of adjacent symbols from a plurality of symbols able to be simultaneously displayed on the display device (MON), which is or are provided with a second marking sign, or groups, which can be simultaneously displayed on the display device (MON), of adjacent symbols provided with the second marking sign can be selected by a sixth and/or seventh input command input into at least one third input device (INP4, INP5) and that when the sixth input command and/or the seventh input command is or are input at least one further item of information, which is associated with a further symbol provided with the second marking sign, is displayed on the display device (MON).

12. Method of displaying alphanumeric and/or graphical symbols on a touch-sensitive image screen (MON), consisting of the steps: providing individual alphanumeric and/or graphical symbols which are provided with a first marking sign; and selecting a symbol or a group of adjacent symbols from a plurality of symbols simultaneously displayed on the touch-sensitive image screen (MON), which is or are provided with the first marking sign, or groups, which are simultaneously displayed on the touch-sensitive image screen (MON), of adjacent symbols provided with the first marking symbol, by means of a first input command, which is generated by contact with a region of the touch-sensitive image screen, for processing in such a way that, through the selection, data associated with the symbol provided with the first marking sign can be called up from a memory (MEM) and displayed on the image screen (MON).

13. Method according to claim 12, **characterised in that** the selected symbol or the group of adjacent, selected symbols is provided with a second marking sign.

14. Method according to claim 13, **characterised in that** a symbol or a group of adjacent symbols from a plurality of symbols simultaneously displayed on the display device (MON), which is or are provided with the second marking sign, or groups, which are simultaneously displayed on the display device (MON), of adjacent symbols provided with the second marking sign can be selected by a second input command generated by contact with a region of the touch-sensitive image screen.

15. Method according to one of claims 13 and 14, **characterised in that** a symbol or group of adjacent symbols from a plurality of symbols simultaneously displayed on the display device (MON), which is or are provided with the second marking sign, or groups, which are simultaneously displayed on the display device (MON), of adjacent symbols provided with the second marking sign can be selected by a third input command which is formed by contact with the touch-sensitive image screen at the location of the symbol provided with the second marking sign or of the symbols provided with the second marking sign.

16. Method according to claim 15, **characterised in that** the geometric spacing of a symbol, which is provided with the second marking sign, or a group of adjacent symbols, which are provided with the second marking sign, from a further symbol, which is provided with the second marking sign, or a further group of symbols, which are displayed on the display device (MON) and which are provided with the second marking sign, is determined and that the third input command can be generated only when the geometric spacing is greater than a predeterminable spacing.

17. Method according to any one of claims 13 to 16, **characterised in that** triggered by a fourth input command generated by contact with a region of the touch-sensitive image screen a jump from a first symbol, which is provided with the second marking sign, or from a first group of adjacent symbols, which are provided with the second marking sign, in forward direction to a second symbol, which is provided with the second marking sign, or to a second group of adjacent symbols, which are provided with the second marking sign, takes place and/or that triggered by a fifth input command generated by contact with a region of the touch-sensitive image screen a jump from the first symbol, which is provided with the second marking sign, or from the first group of adjacent symbols, which are provided with the second marking sign, in rearward direction to a third symbol, which is provided with the second marking sign, or to a second group of adjacent symbols, which are provided with the second marking sign, takes place.

18. Method according to any one of claims 13 to 17, **characterised in that** at least one item of information, which is associated with a symbol provided with the second marking sign, is displayed on the display device (MON) and that when this item of information is displayed on the display device (MON) a symbol or a group of adjacent symbols from a plurality of symbols able to be simultaneously displayed on the display device (MON), which is or are provided with the second marking sign, or groups, which can be simultaneously displayed on the display device (MON), of adjacent symbols provided with the second marking sign, can be selected by a sixth and/or seventh input command generated by contact with a region of the touch-sensitive image screen, and that when the sixth input command and/or the seventh input command is or are input at least one further item of information, which is associated with a further symbol provided with the second marking sign, is displayed on the display device (MON).

19. Use of a system according to any one of claims 1 to 11 in a control system with a central control mechanism (CPU), which is connected by way of at least one bus with domestic appliances (HGI, ..., HGn).

## Revendications

1. Système d'affichage de caractères alphanumériques et/ou graphiques, comprenant un dispositif d'affichage optique (MON) et une unité de commande (MP), des caractères alphanumériques et/ou graphiques individuels étant munis d'un premier marqueur, les caractères munis du premier marqueur étant sélectionnables de manière à ce que, lors d'une sélection, des informations attribuées aux caractères munis du premier marqueur puissent être appelées dans une mémoire (MEM) et être représentées sur le dispositif d'affichage (MON), **caractérisé en ce que** le dispositif d'affichage optique (MON) est un écran tactile, et **en ce qu'**un programme de commande attribué à l'unité de commande est conçu de manière à ce que, déclenché par une première instruction d'entrée générée par contact d'une zone de l'écran tactile, un caractère ou un groupe de caractères voisins, constitué d'une pluralité de caractères représentés simultanément sur le dispositif d'affichage (MON), qui sont munis du premier marqueur, ou des groupes de caractères voisins, représentés simultanément sur le dispositif d'affichage (MON), qui sont munis du premier marqueur, soient sélectionnables pour un traitement.

2. Système selon la revendication 1, **caractérisé en ce que** le programme de commande attribué à l'unité de commande (MP) est conçu de manière à ce que le caractère sélectionné au moyen de la première instruction d'entrée ou le groupe de caractères voisins, sélectionné au moyen de la première instruction d'entrée, soit muni d'un deuxième marqueur.

3. Système selon la revendication 2, **caractérisé en ce qu'**un caractère ou un groupe de caractères voisins, constitué d'une pluralité de caractères représentés simultanément sur le dispositif d'affichage (MON), qui sont munis du deuxième marqueur, ou des groupes de caractères voisins, représentés simultanément sur le dispositif d'affichage (MON), qui sont munis du deuxième marqueur, sont sélectionnables au moyen d'une deuxième instruction d'entrée entrée dans un premier dispositif d'entrée (INP1).

4. Système selon la revendication 3, **caractérisé en ce que** le premier dispositif d'entrée (INP1) est un premier commutateur tactile (TCH1) qui est intégré dans le dispositif d'affichage (MON).

5. Système selon l'une quelconque des revendications 2 à 4, **caractérisé en ce qu'**un caractère ou un groupe de caractères voisins, constitué d'une pluralité de caractères représentés simultanément sur le dispositif d'affichage (MON), qui sont munis du deuxième marqueur, ou des groupes de caractères voisins, représentés simultanément sur le dispositif d'affichage (MON), qui sont munis du deuxième marqueur, sont sélectionnables au moyen d'une troisième instruction d'entrée qui est formée par contact de l'écran tactile à l'endroit du caractère muni du deuxième marqueur ou des caractères munis du deuxième marqueur.

6. Système selon la revendication 5, **caractérisé en ce que** le programme de commande attribué à l'unité de commande (MP) est conçu de manière à ce que l'écart géométrique d'un caractère qui est muni du deuxième marqueur ou d'un groupe de caractères voisins qui sont munis du deuxième marqueur, par rapport à un autre caractère qui est muni du deuxième marqueur ou par rapport à un autre groupe de caractères représentés sur le dispositif d'affichage (MON), qui sont munis du deuxième marqueur, soit déterminé et que la troisième instruction d'entrée ne puisse être générée que si l'écart géométrique est plus grand qu'un écart prédéfinissable.

7. Système selon la revendication 6, **caractérisé en ce que** le programme de commande attribué à l'unité de commande (MP) est conçu de manière à ce que le premier commutateur tactile (TCH1) soit muni d'un troisième marqueur lorsque l'écart géométrique est plus petit que l'écart prédéfinissable et que le premier commutateur tactile (TCH1) soit libéré pour l'entrée de la troisième instruction d'entrée.

8. Système selon l'une quelconque des revendications 1 à 7, **caractérisé en ce que** le programme de commande attribué à l'unité de commande (MP) est conçu de manière à ce que, déclenché par une quatrième instruction d'entrée générée par contact d'une zone de l'écran tactile, un saut soit effectué d'un premier caractère, qui est muni du deuxième marqueur, ou d'un premier groupe de caractères voisins, qui sont munis du deuxième marqueur, en sens d'avancement vers un deuxième caractère, qui est muni du deuxième marqueur, ou vers un deuxième groupe de caractères voisins, qui sont munis du deuxième marqueur, et/ou, **en ce que**, déclenché par une cinquième instruction d'entrée générée par contact d'une zone de l'écran tactile, un saut soit effectué du premier caractère, qui est muni du deuxième marqueur, ou du premier groupe de caractères voisins, qui sont munis du deuxième marqueur, en sens de recul vers un troisième caractère, qui est muni du deuxième marqueur, ou vers un deuxième groupe de caractères voisins qui sont munis du deuxième marqueur.

9. Système selon la revendication 8, **caractérisé par** au moins un dispositif d'entrée supplémentaire (INP2, INP3) dans lequel la quatrième et/ou la cinquième instructions d'entrée peuvent être entrées.

10. Système selon la revendication 9, **caractérisé en ce que** le dispositif d'entrée supplémentaire (INP2, INP3) est un deuxième commutateur tactile (TCH2, TCH3) qui est intégré dans le dispositif d'affichage (MON).

11. Système selon l'une quelconque des revendications 2 à 10, **caractérisé en ce que** le programme de commande attribué à l'unité de commande (MP) est conçu de manière à ce qu'au moins une information, qui est attribuée à un caractère muni du deuxième marqueur, soit représentée sur le dispositif d'affichage (MON), et que lors d'une représentation de cette information sur le dispositif d'affichage (MON), un caractère ou un groupe de caractères voisins, constitué d'une pluralité de caractères représentés simultanément sur le dispositif d'affichage (MON), qui sont munis du deuxième marqueur, ou des groupes de caractères voisins, représentés simultanément sur le dispositif d'affichage (MON), qui sont munis du deuxième marqueur, soient sélectionnables au moyen d'une sixième et/ou d'une septième instructions d'entrée entrée dans au moins un troisième dispositif d'entrée (INP4, INP5), et que, lors d'une entrée de la sixième instruction d'entrée et/ou de la septième instruction d'entrée, au moins une information supplémentaire, qui est attribuée à un caractère supplémentaire muni du deuxième marqueur, soit représentée sur le dispositif d'affichage (MON).

12. Procédé d'affichage de caractères alphanumériques et/ou graphiques sur un écran tactile (MON), comprenant les étapes : munir des caractères alphanumériques et/ou graphiques individuels d'un premier marqueur ; et sélection d'un caractère ou d'un groupe de caractères voisins, constitué d'une pluralité de caractères représentés simultanément sur l'écran tactile (MON), qui sont munis du premier marqueur, ou de groupes de caractères voisins, représentés simultanément sur l'écran tactile (MON), qui sont munis du premier marqueur, au moyen d'une première instruction d'entrée générée par contact d'une zone de l'écran tactile pour un traitement, de manière à ce que, en raison de la sélection, des informations, qui sont attribuées aux caractères munis du premier marqueur, puissent être appelées dans une mémoire (MEM) et soient représentables sur l'écran (MON).

13. Procédé selon la revendication 12, **caractérisé en ce que** le caractère sélectionné ou le groupe de caractères voisins sélectionnés est muni d'un deuxième marqueur.

14. Procédé selon la revendication 13, **caractérisé en ce qu'**un caractère ou un groupe de caractères voisins, constitué d'une pluralité de caractères représentés simultanément sur le dispositif d'affichage (MON), qui sont munis du deuxième marqueur, ou des groupes de caractères voisins représentés simultanément sur le dispositif d'affichage (MON), sont sélectionnables au moyen d'une deuxième instruction d'entrée générée par contact d'une zone de l'écran tactile.

15. Procédé selon l'une quelconque des revendications 13 ou 14, **caractérisé en ce qu'**un caractère ou un groupe de caractères voisins, constitué d'une pluralité de caractères représentés simultanément sur le dispositif d'affichage (MON), qui sont munis du deuxième marqueur, ou des groupes de caractères voisins représentés simultanément sur le dispositif d'affichage (MON), qui sont munis du deuxième marqueur, sont sélectionnables au moyen d'une troisième instruction d'entrée, qui est formée par contact de l'écran tactile à l'endroit du caractère muni du deuxième marqueur ou des caractères munis du deuxième marqueur.

16. Procédé selon la revendication 15, **caractérisé en ce que** l'écart géométrique d'un caractère qui est muni du deuxième marqueur ou d'un groupe de caractères voisins qui sont munis du deuxième marqueur, par rapport à un autre caractère qui est muni du deuxième marqueur ou par rapport à un autre groupe de caractères représentés sur le dispositif d'affichage (MON), qui sont munis du deuxième marqueur, est déterminé et **en ce que** la troisième instruction d'entrée ne peut être générée que si l'écart géométrique est plus grand qu'un écart prédéfinissable.

17. Procédé selon l'une quelconque des revendications 13 à 16, **caractérisé en ce que**, déclenché par une quatrième instruction d'entrée générée par contact d'une zone de l'écran tactile, un saut est effectué d'un premier caractère, qui est muni du deuxième marqueur, ou d'un premier groupe de caractères voisins, qui sont munis du deuxième marqueur, en sens d'avancement vers un deuxième caractère, qui est muni du deuxième marqueur, ou vers un deuxième groupe de caractères voisins, qui sont munis du deuxième marqueur, et/ou, **en ce que**, déclenché par une cinquième instruction d'entrée générée par contact d'une zone de l'écran tactile, un saut est effectué du premier caractère, qui est muni du deuxième marqueur, ou du premier groupe de caractères voisins, qui sont munis du deuxième marqueur, en sens de recul vers un troisième caractère, qui est muni du deuxième marqueur, ou vers un deuxième groupe de caractères voisins, qui sont munis du deuxième marqueur.

18. Procédé selon l'une quelconque des revendications 13 à 17, **caractérisé en ce qu'**au moins une information, qui est attribuée à un caractère muni du deuxième marqueur, est représentée sur le dispositif d'affichage (MON), et **en ce que** lors d'une représentation de cette information sur le dispositif d'affichage (MON), un caractère ou un groupe de caractères voisins, constitué d'une pluralité de caractères représentés simultanément sur le dispositif d'affichage (MON), qui sont munis du deuxième marqueur, ou des groupes de caractères voisins, représentés simultanément sur le dispositif d'affichage (MON), qui sont munis du deuxième marqueur, sont sélectionnables au moyen d'une sixième et/ou d'une septième instructions d'entrée générée par contact d'une zone de l'écran tactile, et **en ce que**, lors d'une entrée de la sixième instruction d'entrée et/ou de la septième instruction d'entrée, au moins une information supplémentaire, qui est attribuée à un caractère supplémentaire muni du deuxième marqueur, est représentée sur le dispositif d'affichage (MON).

19. Utilisation d'un système selon l'une quelconque des revendications 1 à 11 dans un système de commande comprenant une unité de commande centrale (CPU) qui est connectable à des appareils domestiques (HG1, ..., HGn) par l'intermédiaire d'au moins un bus.
